# NEUE EUROPÄISCHE PATENTSCHRIFT

(11) **EP 1 027 767 B2**
(45) Veröffentlichungstag und Bekanntmachung des Hinweises auf die Entscheidung über den Einspruch: **06.08.2008**
(45) Hinweis auf die Patenterteilung: 05.03.2003
(21) Anmeldenummer: 98955466.2
(22) Anmeldetag: 16.10.1998
(51) Int. Cl.: H02M 1/12

(54) **PULSWECHSELRICHTER MIT VARIABLER SCHALTFREQUENZ UND WINDENERGIEANLAGE MIT EINEM PULSWECHSELRICHTER**
PULSE-CONTROLLED INVERTER WITH VARIABLE OPERATING SEQUENCE AND WIND POWER PLANT HAVING SUCH AN INVERTER
CONVERTISSEUR D'IMPULSIONS EN DUREE A FREQUENCE DE FONCTIONNEMENT VARIABLE ET EOLIENNE COMPORTANT LEDIT CONVERTISSEUR

(30) Priorität: 03.11.1997 DE 19748479
(43) Veröffentlichungstag der Anmeldung: 16.08.2000
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP1998/006570
(87) Internationale Veröffentlichungsnummer: WO 1999/023745

(56) Entgegenhaltungen:
- DE-A- 3 204 266
- US-A- 4 190 882
- US-A- 4 520 437
- "MODERN POWER ELECTRONICS Evolution, Technology, and Applications", edited by B.K. Bose, IEEE Press, 1992, Seiten 3 bis 40 und 555 bis 562
- "Windkraftanlagen im Netzbetrieb", Dr. - Ing. S. Heier, 2. ueberarbeitete und erweiterte Auflage, B.G. Teubner, Stuttgart 1996, Seiten 209 bis 249

## Beschreibung

Es ist bei Windenergieanlagen bekannt, diese mit einem Synchrongenerator auszustatten und für den drehzahlvariablen Betrieb des Synchrongenerators einen Gleichspannungszwischenkreis sowie einen nachgeschalteten Pulswechselrichter als Frequenzumrichter vorzusehen.

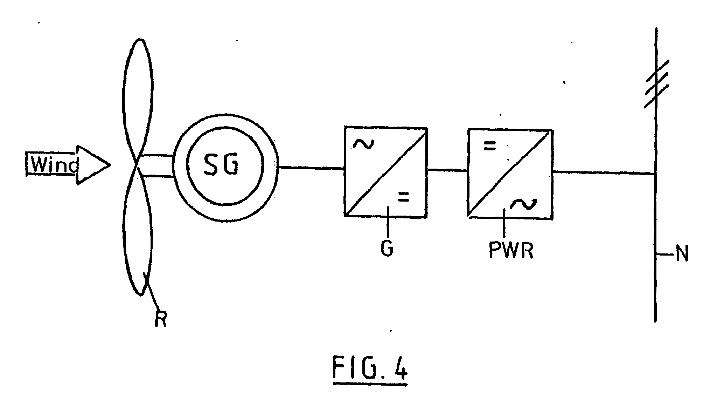

Fig. 4 zeigt das Prinzipschaltbild einer solchen Windenergieanlage, wobei ein direkt vom Rotor angetriebener, drehzahlvariabler Synchrongenerator mit einem nachgeschalteten Frequenzumrichter vorgesehen ist. Beim Gleichstromzwischenkreis wird zunächst der vom Generator erzeugte Strom variabler Frequenz gleichgerichtet und dann über den Frequenzumrichter ins Netz eingespeist.

Mit dieser Konzeption wird ein großer Drehzahlbereich ermöglicht, da der Gleichstromzwischenkreis eine völlige Entkopplung der Generator- und damit der Rotordrehzahl von der Netzfrequenz bewirkt. Der große Drehzahlbereich gestattet einen effektiven windgeführten Betrieb des Rotors, so daß bei entsprechender Auslegung eine spürbare Erhöhung seiner aerodynamisch bedingten Energielieferung erreicht werden kann. Es versteht sich nahezu von selbst, daß diese Konzeption die unan genehmen dynamischen Eigenschaften, die der Synchrongenerator bei direkter Netzanbindung aufweist, völlig eliminiert.

Bis vor wenigen Jahren war ein wesentlicher Einwand gegen das System "Synchrongenerator mit Gleichstromzwischenkreis" die hohen Kosten und der schlechte elektrische Gesamtwirkungsgrad. Weil die gesamte elektrische Leistung über den Umrichter fließt, war bei alten Anlagen der Wirkungsgrad grundsätzlich geringer als bei den drehzahlvariablen Generatorkonzeptionen, die den Umrichter nur im Läuferkreisstrom eines Asynchrongenerators verwenden. Die moderne Umrichtertechnik hat diesen Einwand jedoch weitgehend gegenstandslos gemacht. Heute werden Stromrichter gebaut, deren Verluste außerordentlich gering sind, so daß der Gesamtwirkungsgrad dieses Generatorsystems sich so verhält, wie bei doppeltgespeisten Asynchrongenerator.

Der drehzahlvariable Synchrongenerator mit Gleichstromzwischenkreis ist deshalb heute in der Windenergieanlagen-Technik sehr verbreitet. Daran haben vor allem die neueren Wechselrichter einen bedeutenden Anteil. Mit sogenannten "pulsweitenmodulierten (pwm) Wechselrichtern" werden dabei die störenden Oberschwingungen weitgehend eliminiert. Bekannte pwm-Wechselrichter weisen eine konstante Schaltfrequenz bzw. Taktdauer (auch Pulsfrequenz genannt) auf und über das Verhältnis der Ein- bzw. Ausschaltzeit von zwei Schaltern S1 und S2 wird die gewünschte Sinusform des einzuspeisenden Wechselstroms gebildet. Die Taktdauer, innerhalb der die Schalter S1 und S2 ein- bzw. ausgeschaltet werden, ist dabei wie erwähnt konstant und begrenzt durch die Verlustleistung des Wechselrichters. Bei bekannten Wechselrichtern können die Verluste bis zu 2 % oder mehr der gesamten erzeugten elektrischen Leistung betragen, was angesichts der hohen Kosten einer Windenergieanlage beträchtlich sein kann.

Wird die Schaltfrequenz heruntergesetzt, so kann zwar die Verlustleistung minimiert werden, jedoch steigt dadurch der Gehalt der störenden Oberschwingungen an. Wird die Schaltfrequenz heraufgesetzt, so steigt die Verlustleistung, wie erwähnt, an, jedoch werden dann die Oberschwingungen weitestgehend eliminiert.

Aus DE 32 04 266 ist ein Verfahren und Vorrichtung zum Betrieb eines Pulswechselrichters vorhanden, bei dem eine mit der gewünschten Wechselrichter- Ausgangsspannung synchrone Wechselspannung mit einer Dreieckspannung verglichen und bei Gleichheit beider Spannungen ein Umschaltsignal für die Wechselrichterschalter erzeugt wird. Zur Steigerung der Ausgangsspannungsamplitude wird das Verhältnis von der Steuerspannungsamplitude und der Dreiecksspannungsamplitude auf einen überproportionalen Wert angehoben.

Aus DE 32 07 440 ist ein Verfahren zur Optimierung der Spannungssteuerung von dreiphasigen Pulswechselrichtern bekannt, bei der eine konstante Gleichspannung, insbesondere durch einen Zwischenkreis, zugeführt wird. Hierbei werden zur Optimierung der Spannungssteuerung des dreiphasigen Pulswechselrichters Schaltmuster erzeugt, die eine kontinuierliche Verstellung der Grundschwingungsspannung bei möglichst geringen Oberschwingungseffekt ermöglichen.

Schließlich ist aus DE 32 30 055 ein Steuersatz für einen Pulswechselrichter zum Erzeugen einer Ausgangswechselspannung mit einer durch eine Frequenzsteuerung vorgegebene Sollfrequenz und einer durch eine Amplitudensteuerspannung vorgegebene Sollamplitude bekannt. Der Steuersatz gestattet es, einem Wechselrichter eine hinsichtlich Spannungsausnutzung und Oberschwingungsgehalt optimierte Ausgangsspanung auf einfache Weise vorzugeben. Aus "Modern Power Electronics", B.K. Bose IEEE Press, 1992 ist ein Pulswechselrichter gemäß Oberbegriff des Anspruchs 1 bekannt.

Es ist daher Aufgabe der Erfindung, einen Pulswechselrichter zu schaffen, welcher insgesamt die Verlustleistung bei minimalem Gehalt der Oberschwingungen verringert.

Dies wird erfindungsgemäß mit einem Pulswechselrichter mit den Merkmalen nach Anspruch 1 erreicht. Im Anspruch 2 ist eine Windenergieanlage mit einem Pulswechselrichter nach Anspruch 1 beschrieben. In Anspruch 3 ist eine Anordnung von mehreren parallel zueinander geschalteten Windenergieanlage nach Anspruch 2 beschrieben.

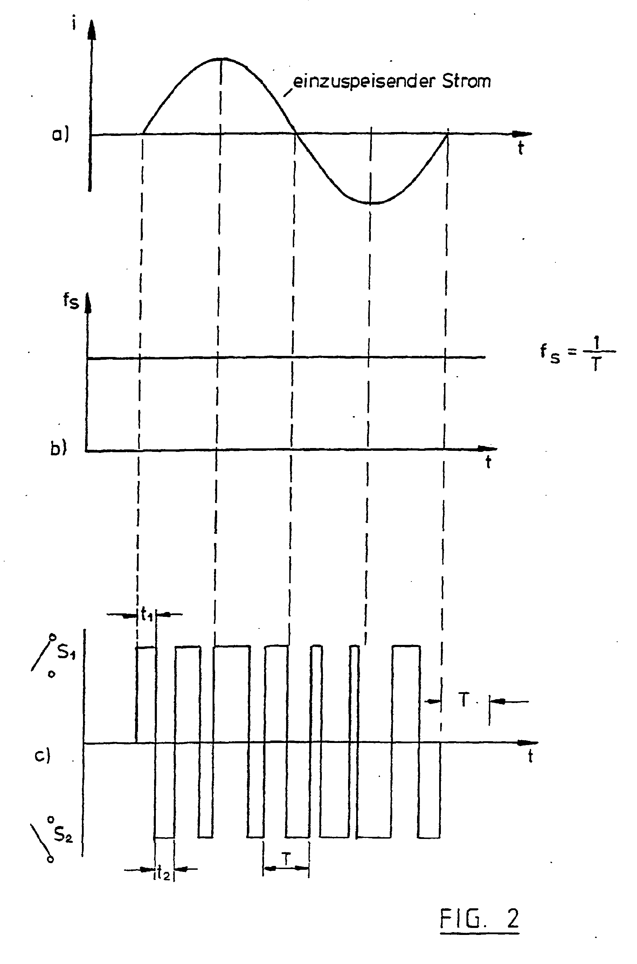

Der Erfindung liegt die Erkenntnis zugrunde, von einem Pulswechselrichter mit einer statischen Schaltfrequenz bzw. Taktdauer, wie aus dem Stand der Technik und aus Fig. 2 bekannt, völlig abzurücken und die Schaltfrequenz variabel zu gestalten, und zwar in Abhängigkeit des zu erzeugenden Wechselstroms. Im Bereich des Nulldurchgangs des erzeugten Wechselstroms ist dabei die Schaltfrequenz maximal, d.h. die Taktdauer minimal; im Bereich der maximalen Amplituden des Wechselstroms ist die Schaltfrequenz minimal, d.h. die Taktdauer maximal.

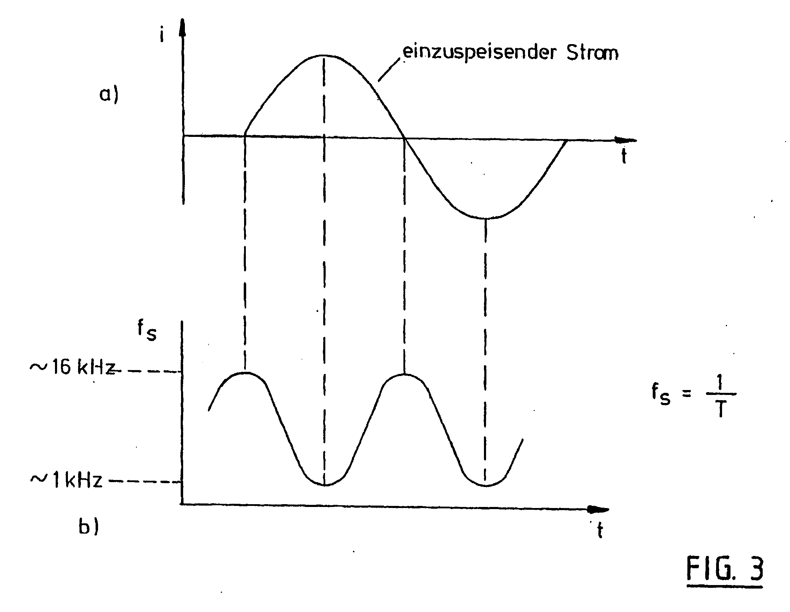

Es konnte gefunden werden, daß bei einem solchen Pulswechselrichter die Schaltungsverluste der Leistungshalbleiter minimiert werden können, was zu einer drastischen Herabsetzung der Verlustleistung führt und daß der einzuspeisende Strom einen sehr hohen Grundschwingungsgehalt ohne störende Oberschwingungen aufweist. Darüber hinaus bilden sich, da keine ausgeprägte feste Schaltfrequenz vorhanden ist, keine störenden Resonanzen aus, wenn mehrere Windenergieanlagen parallel zueinander geschaltet werden, was eine weitere relative Verbesserung des Grundschwingungsgehalts zur Folge hat. Während bei bisherigen Pulswechselrichtern eine statische Schaltfrequenz angenommen wurde und im Bereich der Schaltzeiten der Schalter S1 und S2 nach Optimierungen gesucht wurde, um die Verlustleistung zu verringern und den Oberschwingungsgehalt zu minimieren, schlägt die Erfindung auch eine Optimierung der Schaltfrequenz des Pulswechselrichters vor, wobei sich die Schaltfrequenz in Abhängigkeit des sinusförmigen, einzuspeisenden Stroms ändert. Der Verlauf der variablen Schaltfrequenz ist in Fig. 3b vereinfacht dargestellt.

Nachfolgend wird die Erfindung anhand eines in den Zeichnungen dargestellten Ausführungsbeispiels näher erläutert. In der Figur zeigen:
- Fig. 1: ein Prinzipschaltbild eines Pulswechselrichters,
- Fig. 2: ein Stromlaufdiagramm a), ein Schaltungsfrequenzdiagramm b) sowie ein Ein- bzw. Ausschaltdiagramm c) der Schalter S1 und S2;
- Fig. 3: ein Stromlaufdiagramm und ein Schaltungsfrequenzdiagramm eines erfindungsgemäßen Pulswechselrichters;
- Fig. 4: ein Prinzipschaltbild einer Windenergieanlage mit direkt angetriebenem, drehzahlvariablen Synchrongenerator;
- Fig. 5: ein Blockschaltbild eines Wechselrichters einer E-40-Windenergieanlage.

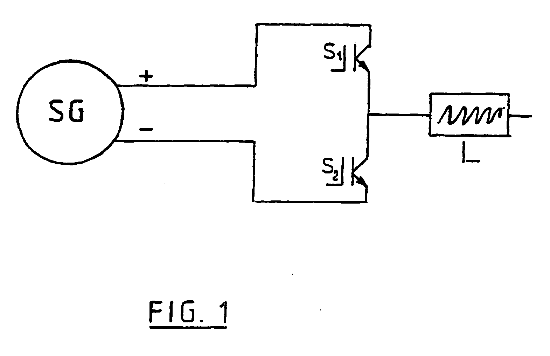

Fig. 1 zeigt einen Schalter S1 und einen Schalter S2 sowie eine nachgeschaltete Induktivität L. Der Schalter S1 ist mit dem Pluspol und der Schalter S2 mit dem Minuspol der gelieferten Gleichspannung verbunden.

Fig. 2 zeigt in a) das Ergebnis der Pulswechselrichtung bei einem bekannten Pulswechselrichter nach Fig. 1. Hierbei ist die Schaltfrequenz fₛ bzw. der Kehrwert der Schaltfrequenz, die Taktdauer T, wie in Fig. 2 b) dargestellt, konstant. Innerhalb eines Taktes ist ein Schalter S1 für eine Zeitdauer t1 und ein Schalter S2 für eine Zeitdauer t2 eingeschaltet. Durch entsprechende Vorgaben und Variationen der Schaltdauern t1 und t2 bzw. der entsprechenden Ausschaltzeiten der Schalter S1 und S2 läßt sich aus dem gelieferten Gleichstrom sinusförmiger Wechselstrom -siehe Fig. 2 a(- generieren. Durch Optimierung der Schaltzeiten t1 zu t2 innerhalb der Schaltperiode T, läßt sich der sinusförmige Verlauf optimieren. Der in Fig. 2 dargestellte Ein- bzw. Ausschaltverlauf ist aus zeichnerischen Gründen lediglich stark vereinfacht dargestellt. Die Schaltfrequenz ist jedoch begrenzt durch die Verlustleistung Pᵥ des Pulswechselrichters. Mit ansteigender Schaltfrequenz steigt die Verlustleistung Pᵥ an. Mit abnehmender Schaltfrequenz nimmt zwar die Verlustleistung Pᵥ ab, jedoch steigt dann der Gehalt an Oberschwingungen, was zu Netzunverträglichkeiten führen kann.

In Fig. 3 ist in 3 b) zu sehen, daß die Schaltfrequenz für den einzuspeisenden Strom i in Fig. 3 a) variabel ausgebildet ist und daß die Schaltfrequenz im Bereich der Nulldurchgänge des zu erzeugenden Wechselstromes i maximal und im Bereich der maximalen Amplituden des zu erzeugenden Wechselstromes i minimal ist. Die Schaltfrequenz fₛ beträgt im Bereich der maximalen Amplituden des zu erzeugenden Wechselstroms i maximal etwa 16 kHz und minimal etwa 1 kHz. Durch die Variabilität der Schaltfrequenz wird erreicht, daß im Bereich der Nulldurchgänge der zu erzeugende Wechselstrom quasi deckungsgleich mit der Ideal-Sinuskurve erzeugt wird und daß der erzeugte Wechselstrom im Bereich der maximalen Amplituden einen größeren Oberschwingungsanteil aufweist, als im Bereich der Nulldurchgänge. Insgesamt ist aber der Gehalt der Oberschwingungen minimal und im Bereich der Nulldurchgänge praktisch Null.

Werden nunmehr mehrere Windenergieanlagen mit einem Synchrongenerator und einem entsprechenden Pulswechselrichter mit einer Steuerung nach Fig. 3 b) parallel geschaltet, stellt sich keine -wie bisher- störende, ausgeprägte, feste Schaltfrequenz ein und durch die variable Schaltfrequenz ergeben sich keine störenden Resonanzen zwischen den einzelnen Windenergieanlagen, so daß bei einer Parallelschaltung mehrerer Windenergieanlagen der Grundschwingungsgehalt insgesamt deutlich verbessert wird.

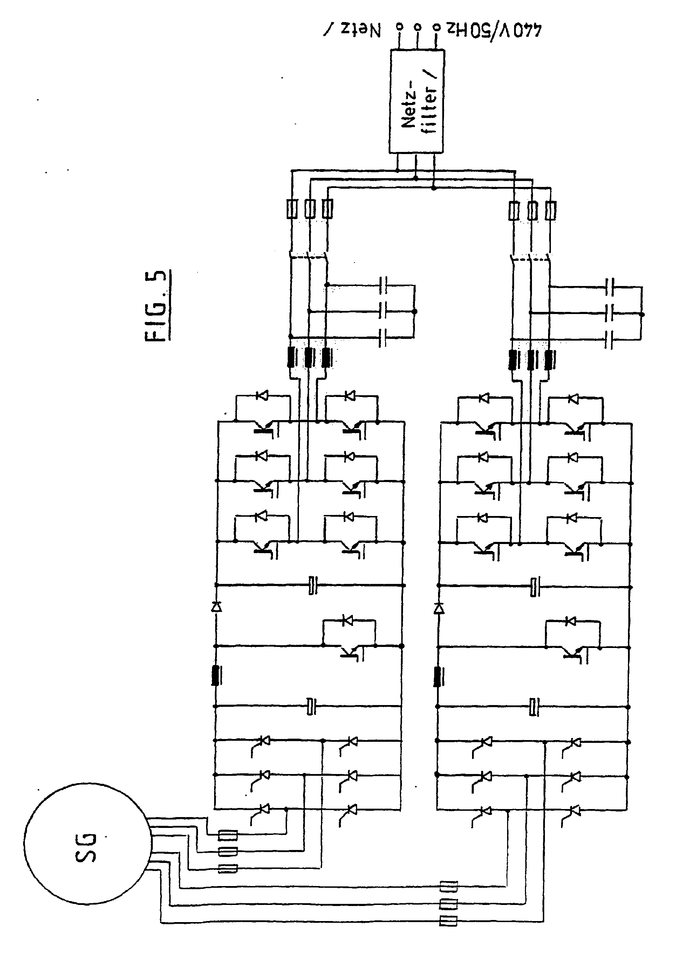

Fig. 4 zeigt das Prinzipschaltbild eines von einem Rotor R angetriebenen, drehzahlvariablen Synchrongenerators SG mit einem nachgeschaltetem Gleichrichter G und einem Pulswechselrichter PWR - s. Fig. 5 -, wie er z.B. in der Winderenergieanlage ENERCON vom Typ "E-40" bekannt ist. Die Synchronmaschine bei der für den Typ "E-40" entwickelten Generator ist eine elektrisch erregte Synchronmaschine mit 84 Polen. Der Durchmesser beträgt ca. 4,8 m.

Die Gesamtverluste des Frequenzumrichters mit einer Ansteuerung nach Fig. 2 betragen bei der bekannten "E-40"-Windenergieanlage noch etwa 2,5 % der gesamten elektrisch erzeugten Leistung. Diese Verluste können mittels der Erfindung um über 30 % oder mehr erheblich reduziert werden, wobei die Netzeinspeisung nach wie vor praktisch oberschwingenfrei gestaltet werden kann.

## Patentansprüche

1. Pulswechselrichter (PWR) mit variabler Pulsfrequenz zur Erzeugung eines sinusförmigen Wechselstromes,
wobei
- die Pulsfrequenz-Änderung abhängig ist vom Verlauf des zu erzeugenden Wechselstromes (i), wobei die Pulsfrequenz (fₛ) im Nulldurchgang des zu erzeugenden Wechselstromes (i) um ein Vielfaches größer ist als im Bereich der maximalen Amplitude des Wechselstromes (i)
**gekennzeichnet dadurch, dass** die Pulsfrequenz (fₛ) im Bereich der Nulldurchgänge des zu erzeugenden Wechselstromes (i) etwa 14-18 kHz und im Bereich der maximalen Amplituden des Stromes etwa 500 Hz bis 2 kHz beträgt.

2. Windenergieanlage mit einem Pulswechselrichter (PWR) nach Anspruch 1.

3. Anordnung von mehreren parallel zueinander geschalteten Windenergieanlagen nach Anspruch 2.

4. Parallelschaltung von mehreren Puls-Wechselrichtern nach Anspruch 1.

## Claims

1. Pulse-controlled inverter (PWR) with a variable pulse repetition frequency for producing a sinusoidal alternating current,
wherein
- the pulse repetition frequency change is dependent on the profile of the alternating current (i) to be produced, with the pulse repetition frequency (fₛ) at the zero crossing of the alternating current (i) which is to be produced being several times greater than in the area of the maximum amplitude of the alternating current (i), **characterized in that** the pulse repetition frequency (fₛ) in the area of the zero crossings of the alternating current (i) which is to be produced is about 14-18 kHz, and in the region of the maximum amplitudes of the current is about 500 Hz to 2 kHz.

2. Wind energy system having a pulse-controlled inverter (PWR) according to Claim 1.

3. Arrangement of a number of wind energy systems, connected in parallel with one another, according to Claim 2.

4. Parallel connection of a number of pulse-controlled inverters according to Claim 1.

## Revendications

1. Convertisseur d'impulsion (PWR) à fréquence variable des impulsions pour la génération d'un courant alternatif sinusoïdal,
- le changement de la fréquence des impulsions dépendant du courant alternatif (i) à générer, la fréquence des impulsions (fₛ) au point zéro du courant alternatif à générer (i) étant plus importante que dans la zone de l'amplitude maximale du courant alternatif (i)
**caractérisé en ce que** la fréquence des impulsions (fₛ) dans la zone des points zéro du courant alternatif (i) à générer est d'environ 14 - 18 kHz et, se situe entre environ 500 Hz et 2 kHz dans la zone de l'amplitude maximale du courant.

2. Installation à énergie éolienne avec un convertisseur d'impulsion (PWR) selon la revendication 1.

3. Dispositif composé de plusieurs installations à énergie éolienne selon la revendication 2 branchées en parallèle les unes aux autres.

4. Branchement en parallèle de plusieurs convertisseurs d'impulsion selon la revendication 1.
